# EUROPÄISCHE PATENTSCHRIFT

(11) **EP 0 504 232 B1**
(45) Veröffentlichungstag und Bekanntmachung des Hinweises auf die Patenterteilung: **16.06.1993**
(21) Anmeldenummer: 91900770.8
(22) Anmeldetag: 30.11.1990
(51) Int. Cl.: B60K 6/04, F16H 59/08, G05G 5/00

(54) **FAHRZEUG MIT ZWEI ACHSEN**
TWIN-AXLE VEHICLE
VEHICULE A DEUX ESSIEUX

(30) Priorität: 05.12.1989 DE 3940172
(43) Veröffentlichungstag der Anmeldung: 23.09.1992
(73) Patentinhaber: AUDI AG, 85045 Ingolstadt (DE)
(72) Erfinder: HEIDL, Roland, D-8071 Lenting (DE); HASLER, Franz, D-8071 Wettstetten (DE)
(74) Vertreter: Le Vrang, Klaus
(86) Internationale Anmeldenummer: EP9002058
(87) Internationale Veröffentlichungsnummer: WO9108122

(56) Entgegenhaltungen:
- EP-A- 0 246 353
- EP-A- 0 334 672
- US-A- 4 042 056
- US-A- 4 180 138

## Beschreibung

Die Erfindung betrifft ein Fahrzeug mit zwei Achsen gemäß dem Oberbegriff des Anspruches 1.

Ein derartiges Fahrzeug ist aus der DE-A 29 29 497 oder der EP-A 0 004 194 bekannt. Derartige Hybridautos besitzen zusätzlich zu der Brennkraftmaschine einen Elektromotor, wobei entweder der Elektromotor zugeschaltet werden kann, wenn eine bessere Traktion erwünscht ist und damit ein Allradantrieb als Anfahrhilfe erzeugt wird, oder es wird auf ausschließlichen Elektrobetrieb umgeschaltet, wenn der Betrieb mit Brennkraftmaschine unerwünscht ist, z. B. aus Abgasgründen. Auch die Geräuschbelästigung ist bei dem Betrieb mit Elektromotor stark vermindert.

Es gilt bei derartigen Hybridfahrzeugen jedoch sicherzustellen, daß bei Betrieb mit Elektromotor die Brennkraftmaschine zuverlässig abgeschaltet ist. Bedienungsfehler sollen dadurch vermieden werden. Die Aufgabe wird gelöst durch den Hauptanspruch.

Erfindungsgemäß ist vorgesehen, daß bei der Umschaltung in den Elektrobetrieb der Schalthebel für die Auswahl der Gänge in die Leerlaufstellung gebracht wird bzw. bei einem Automatgetriebe der Wählhebel in seine N-Stellung geschoben wird. Der Hebel wird dort während des Elektrobetriebes in seiner Stellung fixiert, um auch ein versehentliches Betätigen zu vermeiden. Zur Fixierung können Schalthebelsperren eingesetzt werden, wie sie beispielsweise aus der DE-A-39 05 698 oder der EP-A 0 246 353 bekannt sind.

Günstigerweise findet die Umschaltung von dem Betrieb mit der Brennkraftmaschine auf den Betrieb mit Elektromotor dadurch statt , daß das Fahrzeug vorher angehalten wird und die Zündung ausgeschaltet wird. Über eine Taste kann - nur bei ausgeschalteter Zündung - der Elektrobetrieb eingeschaltet werden, wobei gleichzeitig sichergestellt sein muß, daß der Schalthebel im Leerlauf bzw. der Wählhebel in der N-Stellung steht.

Vorteilhafterweise kann über die Taste zugleich die Kraftstoffzufuhr unterbrochen werden, also die elektrische Ansteuerung sowohl der Benzinpumpe als auch der Einspritzanlage, was die Sicherheit des Fahrzeuges im Elektrobetrieb deutlich erhöht.

Im weiteren werden einige Aspekte der Erfindung anhand der Zeichnung näher erläutert. Es zeigen:
- Fig. 1: eine Seitenansicht des erfindungsgemäßen Fahrzeuges;
- Fig. 2: die Darstellung der Hinterachse des erfindungsgemäßen Fahrzeuges; und
- Fig. 3: den Antrieb der Servopumpe für das erfindungsgemäße Fahrzeug.

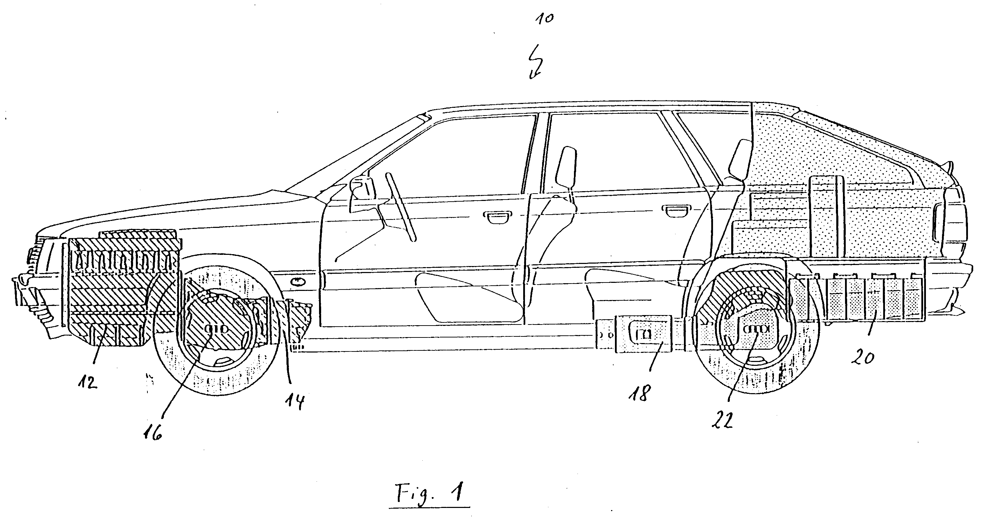

In Fig. 1 ist die Seitenansicht des Hybridfahrzeuges 10 dargestellt, das im vorderen Motorraum eine Brennkraftmaschine 12 mit einem daran angeflanschten Getriebe 14 besitzt. Die Motor-Getriebe-Einheit 12 und 14 treibt die Vorderachse 16 an.

An der Hinterachse ist ein Elektromotor 18 vorgesehen, der über einen eigenen Satz von Akkumulatoren 20 mit Strom versorgt wird. Der Elektromotor 18 treibt die Hinterachse 22 an.

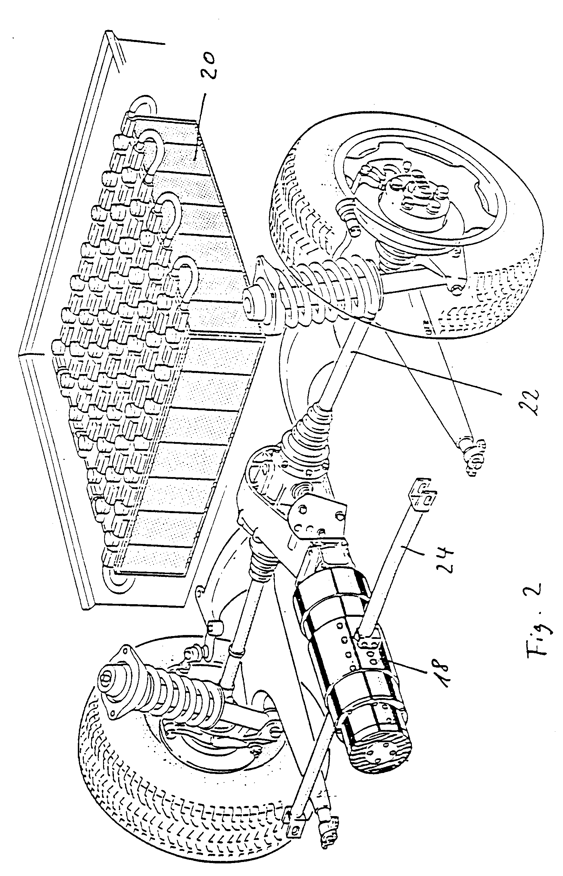

Der Hinterachsaufbau ist in Figur 2 detailliert dargestellt, der Elektromotor 18, versorgt aus den Akkumulatoren 20, treibt über ein Differential die Antriebswellen 22 an.

Mit 24 sind die entsprechenden Halterungen für den Elektromotor 18 dargestellt, die den Elektromotor 18 in geeigneter Weise am Rahmen aufhängen, so daß er die auf die Hinterachse einwirkenden Stöße in entsprechender Form mitmachen kann.

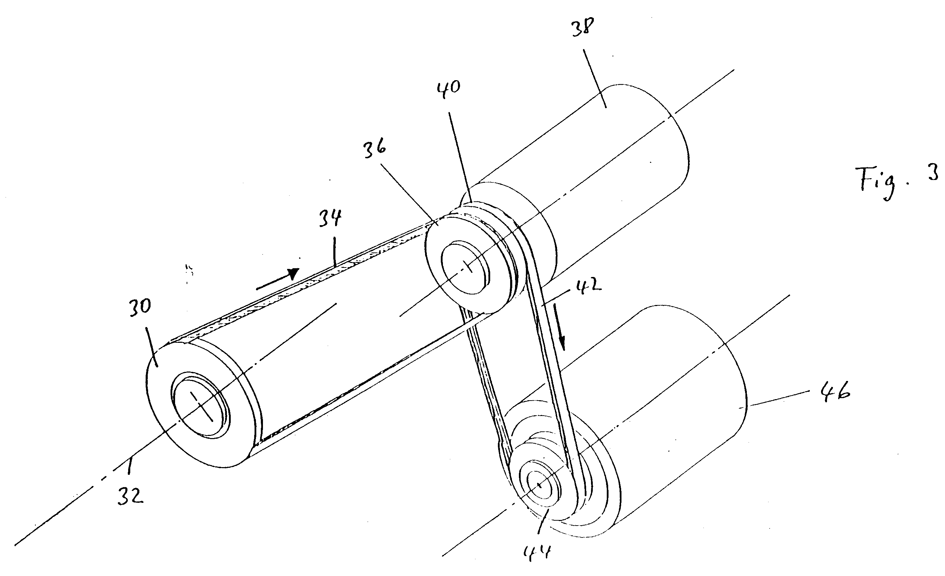

Figur 3 zeigt die Anordnung zum Antrieb der Servopumpe.

Eine Riemenscheibe 30 wird von der Kurbelwelle der Brennkraftmaschine angetrieben, die Mitte der Kurbelwelle ist mit 32 angedeutet. Die Drehung der Riemenscheibe 30 wird über einen Keilriemen 34 auf eine Riemenscheibe 36 übertragen, die auf der Achse der Servopumpe 38 sitzt und diese antreibt. Die Riemenscheibe 36 besitzt einen Freilauf, so daß die Kraftübertragung von der Riemenscheibe 30 auf die Riemenscheibe 36 die Servopumpe 38 antreibt, wohingegen eine Übertragung von der Riemenscheibe 36 auf die Riemenscheibe 30 aufgrund des Freilaufes nicht möglich ist.

Die Antriebswelle für die Servopumpe 38 besitzt eine weitere Riemenscheibe 40, die über einen Keilriemen 42 mit einer Riemenscheibe 44 eines Elektromotors 46 verbunden ist.

Wenn das Hybridfahrzeug 10 nun im Elektromotorbetrieb, also mit stillgelegter Brennkraftmaschine 12, betrieben wird, wird über den Elektromotor 46 und den Keilriemen 42 die Riemenscheibe 40 angetrieben und somit die Servopumpe 38 zur Erhaltung der Funktion der Servolenkung und der Bremskraftverstärkung angetrieben.

Auch die Riemenscheibe 40 kann als Freilaufscheibe ausgelegt werden, so daß bei Antrieb der Servopumpe 38 über die Brennkraftmaschine und dementsprechend über die Riemenscheibe 30 die Riemenscheibe 40 nicht mitläuft und dementsprechend keine Drehung auf die Riemenscheibe 44 und den Elektromotor 46 übertragen wird.

Alternativ dazu kann jedoch in bevorzugter Weise auch bei Betrieb der Brennkraftmaschine der Motor 46 mitlaufen über die Keilriemen 34 und 42, nur wird dann der Elektromotor 46 als Generator geschaltet und verwendet, um die Akkumulatoren 20 wieder aufzuladen.

Die Aufladung der Akkumulatoren 20 kann in bevorzugter Weise dadurch geschehen, daß diese in Zellen zu 12 Volt aufgeteilt werden, die, parallel geschaltet sind und dementsprechend mit einer Spannung von 12 Volt aufgeladen werden.

Bei Antrieb des Elektromotors 18 über die Akkumulatoren 20 werden fünf solche Zellen hintereinandergeschaltet um eine Betriebsspannung von 60 Volt zu erreichen, die an den Elektromotor 18 angelegt werden.

## Patentansprüche

1. Fahrzeug mit zwei Achsen, auf deren eine zum Antrieb eine Brennkraftmaschine einwirkt und deren andere mit Hilfe eines Elektromotors angetrieben wird, wobei alternativ das Fahrzeug (10) nur mit Brennkraftmaschine (12) oder nur mit Elektromotor (18) betrieben wird, dadurch gekennzeichnet, daß zur Umschaltung von Betrieb mit Brennkraftmaschine zum Betrieb mit Elektromotor das Getriebe in die Leerlaufstellung bzw. N-Stellung (Automatgetriebe) gebracht wird.

2. Fahrzeug nach Anspruch 1, dadurch gekennzeichnet, daß der Wählhebel in seiner N-Stellung bzw. der Schalthebel in seiner Leerlaufstellung während des Elektrobetriebes fixiert ist.

3. Fahrzeug nach Anspruch 1 oder 2, dadurch gekennzeichnet, daß zur Umschaltung des Betriebs mit Brennkraftmaschine auf Betrieb mit Elektromotor die Zündung ausgeschaltet wird, eine Taste betätigt wird und die Zündung anschließend wieder eingeschaltet wird.

4. Fahrzeug nach einem der vorhergehenden Ansprüche, dadurch gekennzeichnet, daß bei Umschaltung des Betriebes mit Brennkraftmaschine auf Betrieb mit Elektromotor die Ansteuerung von Benzinpumpe und Einspritzanlage deaktiviert wird.

## Claims

1. A vehicle with two axles, on one of which an internal combustion engine acts as the drive, and the other of which is driven by means of an electric motor, wherein the vehicle (10) is alternatively only driven by the internal combustion engine (12) or by the electric motor (18), characterised in that the transmission is brought into the neutral position or N position (automatic transmission) for changing over from the drive by means of the internal combustion engine to the drive by means of the electric motor.

2. A vehicle according to claim 1, characterised in that the selector lever is fixed in its N position or the gear lever is fixed in its neutral position during electric operation.

3. A vehicle according to claims 1 or 2, characterised in that to change over from internal combustion engine operation to electric motor operation the ignition is switched off, a key is actuated, and the ignition is subsequently switched on again.

4. A vehicle according to any one of the preceding claims, characterised in that on changing over from internal combustion engine operation to electric motor operation the drive for the fuel pump and fuel injection unit is deactivated.

## Revendications

1. Véhicule à deux essieux, sur l'un desquels agit, pour l'entraînement, un moteur à combustion interne et dont l'autre est entraîné au moyen d'un moteur électrique, le véhicule (10) étant alternativement conduit uniquement sur le moteur à combustion interne (12) ou uniquement sur le moteur électrique (18), caractérisé en ce que, pour passer de la conduite sur le moteur à combustion interne à la conduite sur le moteur électrique, la boîte de vitesses est mise au point mort ou dans la position N (boîte automatique).

2. Véhicule selon la revendication 1, caractérisé en ce que, pendant la conduite électrique, le levier de sélection est fixé dans sa position N ou le levier de changement de vitesse est fixé dans sa position de point mort.

3. Véhicule selon la revendication 1 ou 2, caractérisé en ce que, pour le passage de la conduite sur le moteur à combustion interne à la conduite sur le moteur électrique, l'allumage est coupé, une touche est actionnée et l'allumage est ensuite rétabli.

4. Véhicule selon l'une quelconque des revendications 1 à 3, caractérisé en ce que, lors du passage de la conduite sur le moteur à combustion interne à la conduite sur le moteur électrique, la commande de la pompe à essence et du système d'injection est désactivée.
